# EUROPÄISCHE PATENTSCHRIFT

(11) **EP 0 687 391 B1**
(45) Veröffentlichungstag und Bekanntmachung des Hinweises auf die Patenterteilung: **26.03.1997**
(21) Anmeldenummer: 94906907.4
(22) Anmeldetag: 05.02.1994
(51) Int. Cl.: H01S 3/06, H01S 3/17, C03C 3/095, C03C 13/04

(54) **LICHTWELLENLEITER FÜR FASEROPTISCHE VERSTÄRKER FÜR DEN WELLENLÄNGENBEREICH UM 1300 NM**
LIGHT GUIDE FOR OPTICAL FIBRE AMPLIFIERS FOR THE WAVELENGTH RANGE AROUND 1300 NM
GUIDE D'ONDES LUMINEUSES D'AMPLIFICATEURS A FIBRES OPTIQUES POUR LA GAMME DE LONGUEURS D'ONDES DE L'ORDRE DE 1300 NM

(30) Priorität: 05.03.1993 DE 4306933
(43) Veröffentlichungstag der Anmeldung: 20.12.1995
(73) Patentinhaber: ALCATEL N.V., NL-2288 BH Rijswijk (NL); Alcatel SEL Aktiengesellschaft, D-70435 Stuttgart (DE)
(72) Erfinder: WEBER, Dieter, D-70806 Kornwestheim (DE)
(74) Vertreter: Kugler, Hermann, Dipl.-Phys.
(86) Internationale Anmeldenummer: EP9400329
(87) Internationale Veröffentlichungsnummer: WO9421010

(56) Entgegenhaltungen:
- EP-A- 0 466 932
- DE-A- 4 120 054
- JOURNAL OF LIGHTWAVE TECHNOLOGY., Bd.9, Nr.2, Februar 1991, NEW YORK US Seiten 234 - 250, XP000225314 W.J. MINISCALCO 'Erbium doped glasses for fiber amplifiers at 1500 nm'
- ELECTRONICS LETTERS., Bd.23, Nr.15, 16. Juli 1987, STEVENAGE GB Seiten 768 - 769 M. SHIMIZU ET AL. 'High-efficiency Nd-doped fibre lasers using direct-coated dielectric mirror'
- OPTICAL FIBER COMMUNICATION CONFERENCE. 1988 TECHNICAL DIGEST SERIES. POSTCONFERENCE EDITION, Bd.1, 1988, WASHINGTON DC, US Seite 154, XP000014097 W.J. MINISCALCO ET AL. 'Nd3+ doped fiber laser at 1.3 mum'
- OPTICS LETTERS., Bd.16, Nr.22, 15. November 1991, NEW YORK US Seiten 1747 - 1749, XP000244440 Y. OHISHI ET AL. 'Pr3+ doped fluoride fiber amplifier operating at 1.31 mum'
- IEEE JOURNAL OF QUANTUM ELECTRONICS., Bd.25, Nr.10, Oktober 1989, NEW YORK US Seiten 2119 - 2123, XP000084392 R.M. PERCIVAL ET AL. 'Characterization of spontaneous and stimulated emission from Praseodymium (Pr3+) ions doped into a silica-based monomode optical fiber'

## Beschreibung

Die Erfindung betrifft Lichtwellenleiter nach dem Oberbegriff des Patentanspruchs 1. Ein Lichtwellenleiter mit den dort genannten Merkmalen ist vielfach bekannt, z.B. aus telcom report 6 (1983) Beiheft: "Nachrichtenübertragung mit Licht", S. 29 - 35. Lichtwellenleiter mit einer solchen Struktur und Zusammensetzung dienen als Übertragungsmedium für die optische Nachrichtenübertragungstechnik.

Aus Journal of Lightwave Technology, Vol.9, No.2, February 1991, Seiten 220 - 227, ist es bekannt, daß Licht im Wellenlängenbereich um 1530 nm mit solchen Lichtwellenleitern verstärkt werden kann, wenn diese im Kern als laseraktive Substanz Erbium enthalten. Hierauf beruhend existieren faseroptische Verstärker, die mit großem Erfolg in im Wellenlängenbereich um 1530 nm arbeitenden Systemen eingesetzt werden.

Ganz anders ist dies beim Wellenlängenbereich um 1300 nm: Wie im einleitenden Teil der Veröffentlichung PD 12/1 bis PD 12/4, OFC/IOOC'93, February 21-26, 1993, San Jose Convention Center, San Jose California, festgestellt, gibt es für diesen Wellenlängenbereich bis heute keine praktisch realisierbaren faseroptischen Verstärker. Den Wellenlängenbereich um 1300 nm verwenden viele der heutzutage installierten optischen Nachrichtenübertragungssysteme. Der Vorteil liegt darin, daß die Übertragungseigenschaften des Lichtwellenleiters der eingangs genannten Art im Bereich von 1300 nm günstiger sind als im Bereich von 1500 nm, z.B. liegt das Dispersionsminimum solcher Lichtwellenleiter bei 1310 nm. Wünschenswert wäre also ein Lichtwellenleiter zur Verstärkung von Licht im Wellenlängenbereich um 1300 nm.

In der vorstehend genannten Veröffentlichung ist unter den für den 1300 nm-Bereich vorgeschlagenen faseroptischen Verstärkern der Verstärker mit der Praseodym (Pr)-dotierten Fluoridfaser als der am meisten versprechende bezeichnet. Lichtwellenleiter mit Fluoridglas als Grundmaterial haben aber, wie aus: "Lasers und Optronics", August 1991, Seiten 43 - 46, insbesondere S. 44, rechte Spalte, bekannt ist, große Nachteile im Vergleich zu Lichtwellenleitern mit Siliziumdioxid als Grundmaterial, da sie schwach, hygroskopisch und nicht an SiO₂-Lichtwellenleiter durch Schmelzspleißen anspleißbar sind. Dasselbe Problem besteht für faseroptische Verstärker, die eine Neodym (Nd)-Fluoridfaser haben.

Es wäre also wünschenswert, für den 1300 nm-Bereich einen verstärkenden Lichtwellenleiter zu haben, dessen Grundmaterial Siliziumdioxid ist. Aus obengenannten Veröffentlichungen "Journal of Lightwave Technology", S. 220, linke Spalte, ist bekannt, daß es kein praktikabler Vorschlag ist, Siliziumdioxid als Grundmaterial mit Nd zu dotieren, um einen für den Wellenlängenbereich von 1300 nm geeigneten faseroptischen Verstärker zu erhalten. Wegen Absorbtion von angeregten Zuständen ist die Wirksamkeit bei dieser Wellenlänge nämlich stark eingeschränkt.

Aus EP-A-0 466 932 ist es bekannt, in poröse Vorformen von Glasstäben ein Fluorid eines Selten-Erd-Elements, z.B. NdF₃, und ein Fluorid von Aluminium (AlF₃) einzubringen, weil die Fluoride relativ niedrige Schmelzpunkte haben. Weiter ist es bekannt, die porösen Vorformen in einer Sauerstoffatmosphäre vor dem Sintern zu erhitzen und (S.9, Zeilen 9-12), die porösen Glas-Vorformen in einer Sauerstoff enthaltenden Heliumatmosphäre zu sintern, derart, daß die durch Sinterung entstehenden Glasstäbe u.a. Neodym und Fluor enthalten, wobei Neodym an Sauerstoff gebunden ist (Nd₂O₃) und Fluor chemisch nicht an ein anderes Element gebunden ist. (S.11, Zeile 56).

Aus DE-A-4 120 054 (Spalte 10, Zeilen 3 bis 30) ist es bekannt, in einem auf einem Substratmaterial aus einem Mehrkomponentenglas aufgebrachten optischen Wellenleiter eine Pufferschicht aus SiO₂ vorzusehen, die mindestens eine den Brechungsindex steuernde Dotierungssubstanz wie B, P, Ti, Ge, Ta, Al, F enthält. Außerdem ist in einem von zwei Kernwellenleitern mindestens ein zur optischen Verstärkung beitragendes Selten-Erd-Metall wie Yb, Er oder Nd, enthalten.

Aus "Journal of Lightwave Technology" Vol. 9, no. 2, February 1991, Seiten 234 bis 250, sind Lichtwellenleiter bekannt, die mit Selten-Erd-Ionen dotiert sind. Es wird dort diskutiert, was ein vorteilhaftes zusätzliches Dotierungsmittel sein könnte, mit dem Ergebnis, daß Fluor keinen nützlichen Effekt haben würde und daß Aluminium als das günstigste zusätzliche Dotierungsmittel angesehen wird.

Die der Erfindung zugrundeliegende Aufgabe ist daher, die Zusammensetzung eines für den Wellenlängenbereich von 1300 nm geeigneten Verstärkungs-Lichtwellenleiters anzugeben.

Eine Lösung der Aufgabe mit Neodym als Dotiermittel ist im Anspurch 1 angegeben. Eine alternative Lösung mit Praseodym als Dotiermittel ist im Anspruch 2 angegeben. Weiterbildungen sind in den Unteransprüchen angegeben. Ein vorteilhaftes Verfahren zur Herstellung des neuen Lichtwellenleiters ist Gegenstand der Ansprüche 6 bis 9. Ein Aspekt der Erfindung ist auch, daß durch den neuen Lichtwellenleiter auch ein neuer faseroptischer Verstärker geschaffen wurde. Dieser ist Gegenstand des Anspruchs 9.

Die Erfindung wird nun anhand der Zeichnungen beispielsweise näher erläutert. Es zeigen:
- Fig. 1: einen faseroptischen Verstärker, für den Wellenlängenbereich um 1300 nm mit dem neuen Lichtwellenleiter als verstärkendem Lichtwellenleiter und
- Fig. 2: eine Vorrichtung zur Durchführung des bevorzugten Verfahrens zur Herstellung des neuen Lichtwellenleiters.

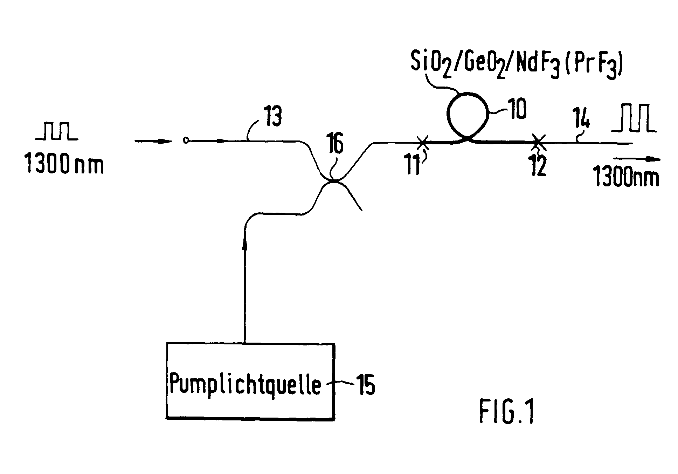

In Fig. 1 ist mit dem Bezugszeichen 10 ein schematisch angedeuteter Verstärker-Lichtwellenleiter eines faseroptischen Verstärkers bezeichnet. An Spleißpunkten 11 und 12 ist er mit einem Lichtwellenleiter 13, der das zu verstärkende optische Eingangssignal leitet bzw. mit einem Lichtwellenleiter 14, der das verstärkte optische Ausgangssignal des faseroptischen Verstärkers leitet, verbunden. Wie für faseroptische Verstärker üblich, ist eine Pumplichtquelle 15 vorhanden, die in dem gezeigten Fall über einen Koppler 16 an den Lichtwellenleiter 13 angekoppelt ist. Wie bei solchen Darstellungen oft üblich, ist der Verstärkungs-Lichtwellenleiter 10 zur Unterscheidung von den normalen Lichtwellenleitern 13 und 14 dicker gezeichnet, obwohl er den gleichen Durchmesser hat. Die Wellenlänge des einen solchen faseroptischen Verstärker durchlaufenden Lichts liegt im Bereich von 1300 nm. Als Signal ist am Eingang ein Digitalsignal angedeutet, ebenso am Ausgang, wobei es am Ausgang als verstärktes Signal dargestellt ist.

Wesentlich für die Erfindung ist, daß der Lichtwellenleiter, der als verstärkender Lichtwellenleiter für den 1300 nm-Bereich vorgesehen ist, folgende Zusammensetzung hat:

Siliziumdioxyd ist das Grundmaterial des gesamten Lichtwellenleiters, wie üblich ist im Kern des Lichtwellenleiters ein den Brechungsindex erhöhendes Dotiermittel, z.B. GeO₂ enthalten, erfindungsgemäß zusätzlich Neodym (Nd) und Fluor. Die Zusammensetzung des Mantels ist ohne Bedeutung. Wichtig ist, daß Neodym mit Fluor verbunden ist, d.h. daß Neodym von Fluorionen umgeben ist. Die Fluorionen dürfen nicht durch Sauerstoffionen verdrängt werden. Die Umgebung von Neodym mit Fluor bewirkt, daß das Neodym die gewünschte Lasereigenschaft hat, die für die Verstärkung von Licht im Wellenlängenbereich um 1300 nm erforderlich ist. Eine Möglichkeit, für die Umgebung von Neodym durch Fluor zu sorgen, besteht darin, daß Neodym und Fluor als Verbindung NdF₃ im Kern enthalten ist.

Statt Neodym kann auch Praseodym (Pr) im Kern enthalten sein. Auch dann gilt das über die Umgebung mit Fluor Gesagte, und auch im Falle von Praseodym ist es günstig, daß Praseodym und Fluor als Verbindung PrF₃ im Kern enthalten sind.

Zur Herstellung des erfindungsgemäßen Lichtwellenleiters ist jedes Verfahren geeignet, das dazu führt, Neodym und Fluor oder Praseodym und Fluor in Verbindung miteinander in den Kern eines Lichtwellenleiters mit Siliziumdioxyd als Grundmaterial einzulagern.

Beispielsweise ist es möglich, durch erhitztes NdF₃-Pulver gasförmiges BF₃ hindurchzuleiten und dadurch das NdF₃ an die Stelle zu transportieren, an der es sich auf einem Substrat abscheiden soll, um eine Dotierung von SiO₂-Material mit NdF₃ zu bewirken.

Besonders günstig ist ein Verfahren, bei dem NdF₃ oder PrF₃ als Komplex mit einer anderen Verbindung dampfförmig zusammen mit Ausgangsstoffen einer chemischen Dampfphasenreaktion, aus der das Kernmaterial entsteht, in die Nähe eines Substrats gebracht wird, so daß es sich zusammen mit den Produkten der chemischen Dampfphasenreaktion auf dem Substrat niederschlagen kann. Beispielweise kann die chemische Dampfphasenreaktion gemäß dem bekannten MCVD-Verfahren in einem Substratrohr durchgeführt werden, so daß das Substratrohr innenbeschichtet wird. Ein solches Verfahren wird nachstehend als Beispiel für ein Verfahren der Abscheidung aus einer chemischen Dampfphasenreaktion erläutert.

Alternativ zu einem solchen MCVD-Verfahren, bei dem das Substrat ein Quarzglasrohr ist und innen beschichtet wird, kann das Verfahren auch eines sein, bei dem das Substratrohr ein stabförmiger Dorn ist, der auf seiner Außenfläche beschichtet wird, oder es kann eine Unterlage sein, die sich um ihre Achse dreht, und auf der durch Beschichtung aus einer Dampfphasenreaktion in axialer Richtung das Kernglasmaterial und eventuell auch das Mantelglasmaterial entsteht. Das Prinzip dieser drei bekannten Varianten von Verfahren der Abscheidung aus einer chemischen Dampfphasenreaktion ist aus der oben angegebenen Veröffentlichung "telcom report" bekannt.

Wesentlich für das hier bevorzugte Verfahren zur Herstellung des neuen Lichtwellenleiters ist, daß NdF₃ oder PrF₃ zusammen mit einer geeigneten anderen Verbindung und den Ausgangsstoffen der chemischen Dampfphasenreaktion, die zum Erzeugen des Kernglasmaterials verwendet wird, dem Substrat zugeleitet wird, damit es sich zusammen mit dem Produkt der chemischen Dampfphasenreaktion auf dem Substrat abscheiden kann.

In dem nachstehend beschriebenen Ausführungsbeispiel eines geeigneten Verfahrens ist die genannte andere Verbindung Aluminiumfluorid (AlF₃). Aluminiumtrifluorid ist eine Verbindung, die geeignet ist, mit NdF₃ oder PrF₃ einen Komplex zu bilden, der eine gegenüber NdF₃ oder PrF₃ deutlich herabgesetzte Verdampfungstemperatur hat. Statt Aluminiumtrifluorid kann auch Lanthantrifluorid (LaF₃) verwendet werden oder irgendeine andere Verbindung, die in der Lage ist, den genannten Komplex mit deutlich herabgesetzter Verdampfungstemperatur zu bilden. Im Falle von AlF₃ oder LaF₃ entsteht ein Lichtwellenleiter, der zusätzlich zu den bisher genannten Bestandteilen den weiteren Bestandteil Aluminium oder Lanthan, und zwar in einer Verbindung AlF₃ bzw. LaF₃, enthält. Diese Bestandteile sind eine Folge des Herstellungsverfahrens und dienen nicht dazu, die gewünschten optischen Eigenschaften zu erzielen.

Für die optischen Eigenschaften ist folgendes wesentlich: Der Kern enthält das in eine SiO₂-Matrix eingebaute Neodym oder Praseodym, welche eine Fluoreszenzbande besitzen, die den Bereich von 1280 bis 1330 nm gleichmäßig überdeckt. Neodym oder Praseodym ist dabei stets von Fluor umgeben. Ein Verstärkungs-Lichtwellenleiter mit einem solchen Kern kann in Lichtwellenleiter-Nachrichtübertragungssystemen, die den 1300 nm-Bereich benutzen, direkt eingesetzt werden.

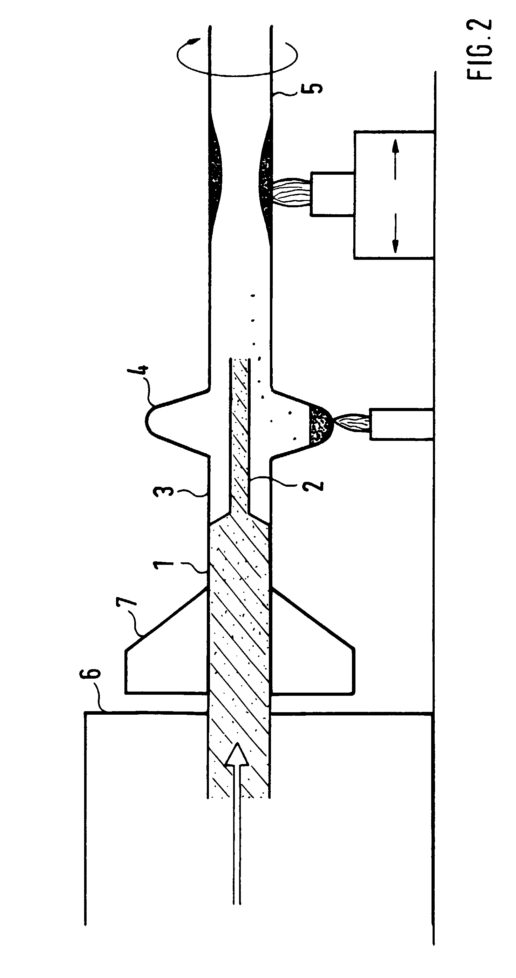

Ein Ausführungsbeispiel eines bevorzugten Verfahrens wird nachstehend anhand von Fig. 2 erläutert, die eine Vorrichtung zur Durchführung des Verfahrens zeigt.

Die Herstellung eines Verstärkungslichtwellenleiters erfolgt über eine Lichtwellenleiter-Vorform nach dem MCVD-Verfahren, welches in der Weise abläuft, daß ein in eine Glasdrehbank eingespanntes und rotierendes Substratrohr, welches in der Regel aus Quarzglas besteht, in mehreren Durchgängen mit den Mantel- bzw. Kernschichten aus einem künstlichen Glas beschichtet wird. Die Ausgangsstoffe für die Mantel- bzw. Kernschichten werden in Gasform in das Substratrohr geleitet. Durch die in Längsrichtung fortschreitende Erhitzung des Substratrohres durch einen Knallgasbrenner wird fortschreitend durch Abscheidung aus einer chemischen Dampfphasenreaktion auf der Innenwandung des Substratrohres eine künstliche Glasschicht bestimmter Zusammensetzung erzeugt. Die Länge des Substratrohres beträgt üblicherweise 1250 mm. Als Ausgangswerkstoffe für die Herstellung der Schichten aus künstlichem Glas werden beispielweise Siliziumtetrachlorid (SiCl₄), Germaniumtetrachlorid (GeCl₄), Phosphoroxitrichlorid (OPCl₃) und gegebenenfalls Hexafluorethan (C₂F₆) zusammen mit Sauerstoff und Helium verwendet.

Fig. 2 zeigt den Teil einer in einer Glasdrehbank eingespannten Vorrichtung für die Durchführung des erfindungsgemäßen Verfahrens. Diese Vorrichtung besteht aus dem Rohr 1 mit größerem Durchmesser am linken Ende. Sein Durchmesser entspricht etwa dem Durchmesser des Substratrohres 5. Das Rohr 1 verjüngt sich etwa in der Mitte der Vorrichtung - ihre Gesamtlänge beträgt etwa 350 mm - zu einem Rohr 2 mit kleinerem Durchmesser. Das Rohr 2 ist von einem anderen Rohr 3 mit größerem Durchmesser umgeben, welches am linken Ende verschlossen, mit dem Rohr 1 verbunden ist und welches eine rotationssymmetrische Verdickung 4 besitzt.

Am rechten Ende des Rohres 3 ist das zu beschichtende Substratrohr 5 angeschmolzen, welches beispielsweise eine Länge von 900 mm hat. Das linke Ende der Vorrichtung, d.h. das Rohr 1, ist drehbar in der Glasdrehbank 6 gelagert und wird von dem Antrieb 7 in Drehung versetzt.

Während des Betriebes der Vorrichtung sind in der Verdickung 4 die Werkstoffe enthalten, welche für die Durchführung des erfindungsgemäßen Verfahrens benötigt werden, und zwar Aluminiumfluorid (AlF₃) als Komplexbildner und Neodymfluorid (NdF₃). Die Ausgangsstoffe Aluminiumfluorid und Neodymfluorid sind in Pulverform erhältlich.

Sie werden im Verhältnis 3 bis 4 zu 1 (3 bis 4 Teile AlF₃; 1 Teil NdF₃) in die Verdickung eingefüllt. Während dieses Verfahrensabschnittes wird die Verdickung 4 und die darin enthaltenen Stoffe nicht erhitzt. Erst wenn die mit dem Seltenerd-Element dotierte Kernschicht erzeugt werden soll, wird die Verdickung 4 und somit die darin enthaltenen Stoffe auf 1200 bis 1400°C erhitzt.

Beim Erhitzen des Gemisches aus Aluminiumtrifluorid und Neodymtrifluorid verbinden sich diese beiden zu einem Komplex, der bei den genannten Temperaturen einen beträchtlichen Dampfdruck besitzt, der dazu ausreicht, den Komplex dampfförmig in das Substratrohr einzubringen.

Für Neodymtrifluorid wird ein Schmelzpunkt von über 2000°C angegeben. Eine Erhitzung dieser Verbindung auf eine Temperatur von 1300°C würde nicht zu einem Dampfdruck führen, um diese Verbindung in das Substratrohr einzubringen.

Der im Gemisch entstandene Komplex - angenommen wird die Stöchiometrie 3 (AlF₃) x NdF₃ - gelangt zusammen mit dem Gasgemisch SiCl₄; Ge Cl₄; Sauerstoff, Helium und ggf. Hexafluorethan in das Substratrohr und wird dort hinter dem Brenner thermophoretisch gesteuert in die Oxidmasse eingebaut. Es ist dabei wichtig, daß der Komplex (man kann ihn Fluorokomplex nennen) eingebaut wird; die Fluorionen dürfen nicht durch Sauerstoffionen verdrängt werden.

Bei der Durchführung des vorgeschlagenen Verfahrens zur Herstellung der Lichtwellenleiter-Vorform mit einer mit NdF₃ oder PrF₃ oder beiden dotierten Kernschicht hat es sich als zweckmäßig erwiesen, nach dem Erzeugen der NdF₃ oder PrF₃ dotierten Kernschicht in einem weiteren Durchgang eine weitere Kernschicht ohne derartige Dotierung zu erzeugen und dann vor dem Kollabieren des Substratrohres etwa 70 % der Gesamtdicke der 1. und 2. Kernschicht abzuätzen, beispielsweise mit Hexafluorethan. Dadurch ergibt sich eine besonders reine Kernschicht, welche ein exakt rechteckiges Kernprofil aufweist.

## Patentansprüche

1. Lichtwellenleiter aus Siliziumdioxid als Grundmaterial, mit einem Kern und einem Mantel und mit einem oder mehreren den Brechungsindex erhöhenden Dotiermitteln im Kern,
**dadurch gekennzeichnet**, daß im Kern zusätzlich Neodym und daran gebundenes Fluor enthalten sind.

2. Lichtwellenleiter aus Siliziumdioxid als Grundmaterial, mit einem Kern und einem Mantel und mit einem oder mehreren den Brechungsindex erhöhenden Dotiermitteln im Kern, **dadurch gekennzeichnet**, daß im Kern zusätzlich Praseodym und daran gebundenes Fluor enthalten sind.

3. Lichtwellenleiter nach Anspruch 1 oder 2, dadurch gekennzeichnet, daß Neodym und Fluor als Verbindung NdF₃ bzw. PrF₃ im Kern enthalten sind.

4. Lichtwellenleiter nach einem der vorstehenden Ansprüche, dadurch gekennzeichnet, daß er im Kern zusätzlich Aluminium oder Lanthan oder oder ein Element enthält, das in der Lage ist, eine Verbindung zu bilden, die mit NdF₃ oder PrF₃ einen Komplex bildet, dessen Verdampfungstemperatur gegenüber der von NdF₃ oder PrF₃ herabgesetzt ist.

5. Lichtwellenleiter nach Anspruch 4, dadurch gekennzeichnet, daß Aluminium oder Lanthan in einer Verbindung AlF₃ bzw. LaF₃ im Kern enthalten ist.

6. Verfahren zur Herstellung eines Lichtwellenleiters nach einem der vorstehenden Ansprüche, bei dem das Kernmaterial und gegebenenfalls auch das Mantelmaterial durch Abscheidung aus einer chemischen Dampfphasenreaktion auf einem Substrat erzeugt und das erzeugte Material zu einem Lichtwellenleiter weiterverarbeitet wird, **dadurch gekennzeichnet**, daß aus Neodymfluorid (NdF₃) oder Praseodymfluorid (PrF₃) und einer anderen Verbindung ein Komplex gebildet und dampfförmig zusammen mit den Ausgangsstoffen der chemischen Dampfphasenreaktion dem Substrat zugleitet wird, so daß auf diesem das Produkt der chemischen Dampfphasenreaktion und der Komplex abgeschieden wird.

7. Verfahren nach Anspruch 6, dadurch gekennzeichnet, daß als Verbindung zur Bildung des Komplexes Aluminiumtrifluorid (AlF₃) oder Lanthantrifluorid (LaF₃) oder eine andere Verbindung verwendet wird, die mit NdF₃ oder PrF₃ einen Komplex bildet, dessen Verdampfungstemperatur deutlich gegenüber der von NdF₃ oder PrF₃ herabgesetzt ist.

8. Verfahren nach Anspruch 6 oder 7, bei dem als Substrat ein Quarzglasrohr verwendet wird und die Ausgangsstoffe der chemischen Dampfphasenreaktion in das Substratrohr eingeleitet werden, dadurch gekennzeichnet, daß die Ausgangsstoffe der chemischen Dampfphasenreaktion zusammen mit dem in Dampfform gebrachten gebildeten Komplex in das Substratrohr eingeleitet werden, so daß durch Abscheidung des Produkts der chemischen Dampfphasenreaktion und des Komplexes das Substratrohr innen beschichtet wird, und daß das innen beschichtete Substratrohr in an sich bekannter Weise zu einem Lichtwellenleiter weiterverarbeitet wird.

9. Faseroptischer Verstärker (16, 10, 15) mit einem Lichtwellenleiter (10) als verstärkendem Element, **dadurch gekennzeichnet**, daß der Lichtwellenleiter (10) die Merkmale eines der vorstehenden Ansprüche 1 bis 5 hat (Fig. 1).

## Claims

1. An optical waveguide made of silicon dioxide as the basic material, with a core and a sheath, where the core contains one or more doping agents which increase the index of refraction, characterized in that the core additionally contains neodymium with fluorine bonded thereto.

2. An optical waveguide made of silicon dioxide as the basic material, with a core and a sheath, where the core contains one or more doping agents which increase the index of refraction, characterized in that the core additionally contains praseodymium with fluorine bonded thereto.

3. An optical waveguide as claimed in claim 1 or 2, characterized in that the core contains neodymium and fluorine as the compound NdF₃ or PrF₃.

4. An optical waveguide as claimed in one of the preceding claims, characterized in that the core additionally contains aluminum or lanthanum, or an element which is able to build a compound which forms a complex with Ndf₃ or PrF₃, whose vaporization temperature is lower than that of NdF₃ or PrF₃.

5. An optical waveguide as claimed in claim 4, characterized in that the core contains aluminum or lanthanum in a compound AlF₃ or LaF₃.

6. A method for manufacturing an optical waveguide as claimed in one of the preceding claims, in which the core material and possibly also the sheath material is produced on a substrate by precipitation from a chemical vapor reaction, and where the produced material is further processed into an optical waveguide, characterized in that a complex is formed with neodymium fluoride (NdF₃) or praseodymium (PrF₃) and another compound, and is supplied in vapor form to the substrate together with the reactants of the chemical vapor reaction, so that the product of the chemical vapor reaction and the complex are precipitated on the substrate.

7. A method as claimed in claim 6, characterized in that aluminum trifluoride (AlF₃) or lanthanum trifluoride (LaF₃) or another compound is used as the compound which forms a complex with NdF₃ or PrF₃, whose vaporization temperature is clearly lower than that of NdF₃ or PrF₃.

8. A method as claimed in claim 6 or 7, in which a quartz tube is used as a substrate, and the reactants of the chemical vapor reaction are supplied to the substrate tube, characterized in that the reactants of the chemical vapor reaction are supplied to the substrate tube together with the vaporized complex, so that the substrate tube is coated on the inside by the precipitation of the product of the chemical vapor reaction and the complex, and that the internally coated substrate tube is further processed into an optical waveguide in the known manner.

9. Fiber-optic amplifier (16, 10, 15) with an optical waveguide (10) as the amplifying element, characterized in that the optical waveguide (10) contains the features of one of the preceding claims 1 to 5 (figure 1).

## Revendications

1. Guide d'ondes lumineuses à base de dioxyde de silicium, composé d'une âme et d'une gaine et d'un ou plusieurs agents de dopage permettant d'augmenter l'indice de réfraction de l'âme. Guide d'ondes lumineuses caractérisé par le fait que l'âme contient du fluor associé à du néodyme.

2. Guide d'ondes lumineuses à base de dioxyde de silicium, composé d'une âme et d'une gaine et d'un ou plusieurs agents de dopage permettant d'augmenter l'indice de réfraction de l'âme. Guide d'ondes lumineuses caractérisé par le fait que l'âme contient du fluor associé à du praséodyme.

3. Guide d'ondes lumineuses suivant les revendications 1 et 2, caractérisé par le fait que du néodyme ou du praséodyme et du fluor sont contenus dans l'âme sous la forme de composés NdF₃ ou PrF₃.

4. Guide d'ondes lumineuses suivant l'une des revendications précédentes, caractérisé par le fait que l'âme contient également de l'aluminium ou du lanthane ou tout autre élément pouvant former un composé, qui lui-même peut avec du NdF₃ ou du PrF₃ former un complexe dont la température d'évaporation est inférieure à celle du NdF₃ ou du PrF₃.

5. Guide d'ondes lumineuses suivant la revendication 4, caractérisé par le fait que de l'aluminium ou du lanthane et du fluor sont contenus dans l'âme sous la forme d'un composé AlF₃ ou LaF₃.

6. Procédé pour la fabrication d'un guide d'ondes lumineuses suivant l'une des revendications précédentes, dans lequel le matériau de l'âme, et le cas échéant celui de la gaine, est obtenu par précipitation à partir d'une réaction chimique en phase vapeur sur un substrat. Le matériau obtenu est ensuite transformé en guide d'ondes lumineuses. Ce guide d'ondes lumineuses est caractérisé par le fait qu'un complexe est formé à partir de fluorure de néodyme (NdF₃) ou de fluorure de praséodyme (PrF₃) et d'un autre composé, et que ce complexe ainsi que les composants de départ de la réaction chimique en phase vapeur sont mis en contact avec le substrat, de telle manière que le produit de la réaction chimique en phase vapeur et le complexe s'y déposent.

7. Procédé suivant la revendication 6, caractérisé par le fait que l'on utilise pour la formation du complexe, les composés trifluoroaluminium (AlF₃) ou trifluorolanthane (LaF₃) ou tout autre composé pouvant former avec le NdF₃ ou le PrF₃ un complexe dont la température d'évaporation est nettement inférieure à celle du NdF₃ ou du PrF₃.

8. Procédé suivant les revendications 6 ou 7, utilisant comme substrat un tube de verre quartzeux dans lequel on introduit les composants de départ de la réaction chimique en phase vapeur. Procédé caractérisé par le fait que les composants de départ de la réaction chimique ainsi que le complexe en phase vapeur sont introduits dans le tube de substrat, de telle manière que, par précipitation des produits de la réaction chimique en phase vapeur et du complexe, une couche se dépose à l'intérieur du tube de substrat, qui ainsi recouvert est transformé, selon des procédés connus, en guide d'ondes lumineuses.

9. Amplificateur à fibres optiques (16, 10, 15) possédant un guide d'ondes lumineuses (10) comme élément amplificateur, caractérisé par le fait que le guide d'ondes lumineuses (10) possède les caractéristiques décrites dans les revendications 1 à 5 (Fig. 1).
